# EUROPEAN PATENT APPLICATION

(11) **EP 2 266 836 A1**
(43) Date of publication of application: **29.12.2010**
(21) Application number: 10166384.7
(22) Date of filing: 17.06.2010
(51) Int. Cl.: B60Q 1/14

(54) **Headlamp system where light intensity is adjusted automatically**

(30) Priority: 18.06.2009 TR 200904762
(71) Applicant: Tofas Turk Otomobil Fabrikasi Anonim Sirketi, 34394 Istanbul (TR)
(72) Inventor: Yildiz, Ayhan, 16369, Bursa (TR)
(74) Representative: Dericioglu, Ekin

(57) **Abstract**

The present invention relates to a headlamp system (100), which comprises at least one ultrasonic sensor (101, 102), at least one light sensor (201, 202), at least one microprocessor (300), at least one current driver circuit (401 402), and at least one headlamp (501, 502); and which is used for automatic adjustment of light intensity of headlamps (501, 502) of motor vehicles according to the following distance (d) and to the light emitted by the headlamps of oncoming vehicles (C).

## Description

### Field of the Invention

The present invention relates to a headlamp system which allows adjusting light intensity of motor vehicle headlamps according to the external environment conditions.

### Background of the Invention

Motor vehicle headlamps are generally operated in two different intensities known as high beam and low beam. In vehicles having this property, while high beam/low beam preference can be made manually by the driver, applications of automatic switching between high and low beams are observed in some vehicles with some improvements made in recent times. However, in addition to the advantages such as increasing driving visibility, use of high beam headlamps also brings along certain drawbacks. Especially the high beam headlamps of oncoming vehicles (coming from the opposite direction) and the high beam headlamps of the following vehicles (coming from behind) blinding the driver directly and by reflection (e.g. through the rearview mirror), respectively, threaten driving safety. Therefore, there has arisen a requirement to use the high beam headlamps in a controlled manner and various improvements for this purpose are present in the state of the art.

The German patent document DE19630216, an application in the state of the art, discloses controlling the headlamps of motor vehicles depending on the travel conditions. By means of two sensors, one for ambient light and the other aimed in the travel direction, the ambient light intensity when traveling is detected and the headlamps are automatically adjusted accordingly.

The United States patent document US2006091813, an application in the state of the art, discloses a system by which vehicle headlamps are controlled automatically. According to this system, lights coming from the other vehicles in the traffic and these vehicles are detected by the help of a display system and the light intensity of the headlamps is adjusted according to the obtained data.

### Summary of the Invention

An objective of the present invention is to provide a headlamp system which enhances driving safety of vehicles by adjusting the light intensity automatically according to the traffic conditions.

Another objective of the invention is to provide a headlamp system which does not require manual adjustment and adjusts light intensity of the headlamps optimally.

A further objective of the invention is to provide a long-lasting and low cost automatic headlamp system.

### Detailed Description of the Invention

The automatic headlamp system developed to attain the objective of the present invention is illustrated in the accompanying figures, in which:

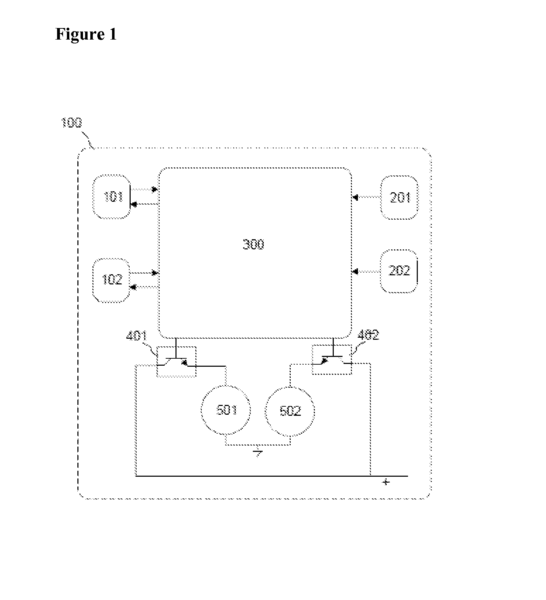

Figure 1 is the schematic view of one embodiment of the automatic headlamp system.

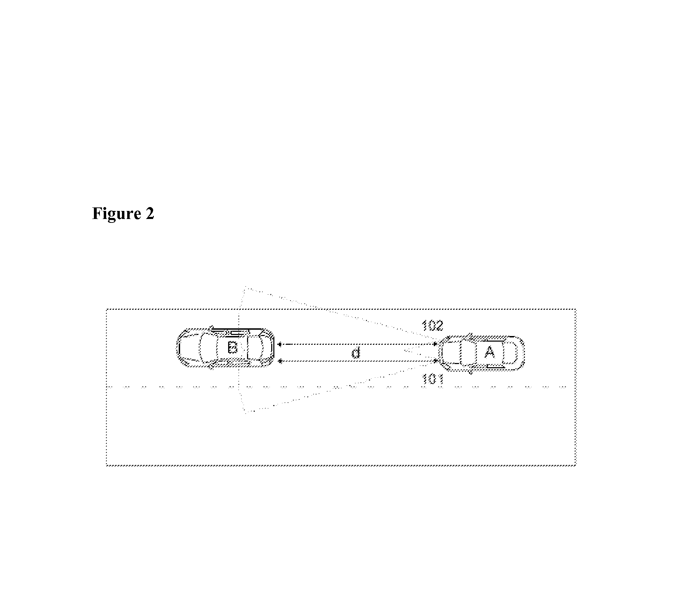

Figure 2 is the representational view of a situation where adjustment is made according to the distance with the vehicle that is followed.
Figure 3 is the representational view of a situation where adjustment is made according to the light of the oncoming vehicle.

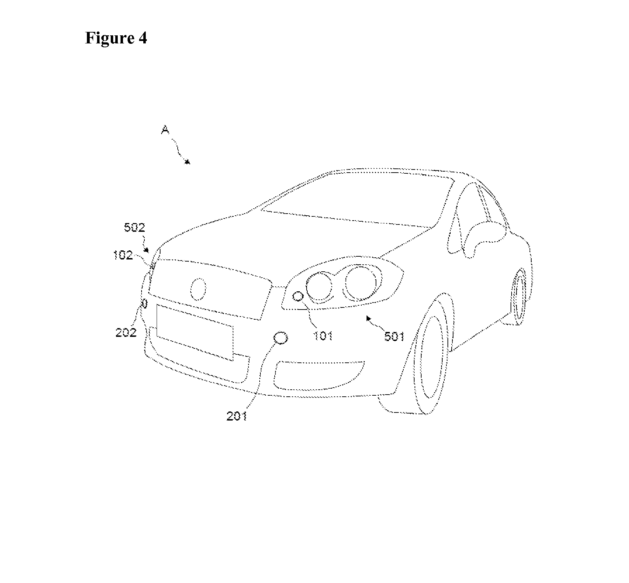

Figure 4 is the perspective view of the vehicle, where the transceiver and sensors are connected, in one embodiment of the invention.

The components given in the figures are individually numbered where the numbers refer to the following:
- 100.: Headlamp system
- 101,102.: Ultrasonic sensor
- 201,202.: Light sensor
- 300.: Microprocessor
- 401, 402.: Current Driver Circuit
- 501,502.: Headlamp

The headlamp system (100) is used for automatic adjustment of light intensities of the headlamps in motor vehicles, and comprises
- at least one ultrasonic sensor (101, 102) which measures the distance (d) between the motor vehicle (A) that it is mounted on and the vehicle (B) that is followed,
- at least one light sensor (201, 202) which detects the light coming from the oncoming vehicle (C),
- a microprocessor (300), to which are connected ultrasonic sensors (101, 102) and light sensors (201, 202), and which changes the signal level at the analog output according to the data received from the said sensors (101, 102, 201, 202),
- at least one current driver circuit (401, 402), which is connected to the microprocessor (300) and whose current level at the output thereof changes in direct proportion with the signal level at the analog output of the microprocessor (300),
- at least one headlamp (501, 502) driven by the current driver circuit (401,402).

The invention is preferably used in vehicles with double headlamps. In this embodiment, the inventive headlamp system (100) comprises two headlamps (501, 502), one on the left and the other on the right, and for each headlamp (501, 502), one ultrasonic sensor (101, 102), one light sensor (201, 202) and one current driver circuit (401, 402). The ultrasonic sensors (101, 102) and the light sensors (201, 202) are located at the front part of the vehicle (A).

The microprocessor (300) has at least one transceiver, at least one input/output (I/O), at least one optical sensor input and at least one analog output.

The ultrasonic sensors (101, 102) are connected to the transceiver input/output (I/O) of the microprocessor (300) and bidirectional data transfer can be performed between the ultrasonic sensors (101, 102) and the microprocessor (300). The light sensors (201, 202) are connected to the optical sensor inputs of the microprocessor (300). The microprocessor (300) has one analog output for each headlamp and the said outputs are connected to the current driver circuits (401, 402). In each of the current driver circuits (401, 402) there is at least one transistor which is preferably bipolar. In the current driver circuits (401, 402); 'base' of the transistors forms the end to which the analog output of the microprocessor (300) is connected, "collector" thereof forms the end by which the current driver circuit (401, 402) is driven by the supply voltage coming from the vehicle accumulator, and the "emitter" thereof forms the output by which the electric energy required to light the headlamps (501, 502) is transmitted. (Figure -1)

The ultrasonic sensors (101, 102) constantly measure the distance (d) between the motor vehicle (A) that it is provided on and the leading vehicle (B) that is followed, and transmits the results to the microprocessor (300). (Figure -2)

The light sensors (201, 202) detect the light coming from the headlamps of the oncoming vehicle (C) and transmit the results to the microprocessor (300) (Figure - 3). In order for the light sensors (201, 202) to work without getting affected by the light emitted from the headlamps (501, 502) of the vehicle (A) itself, in one embodiment of the invention, the light sensors (201, 202) are mounted to the front part of the vehicle (A), at points that are not illuminated by the headlamps (501, 502). (Figure -4)

The microprocessor (300) controls light intensity of the headlamps (501, 502) by means of the signals it sends to the current driver circuits (401, 402) according to the distance information received from the ultrasonic sensors (101, 102) and the light information received from the light sensors (201, 202). Light intensities of the left headlamp (501) and the right headlamp (502) are controlled independent from each other according to the data received from the ultrasonic sensors (101, 102) and the light sensors (201, 202).

In the preferred embodiment of the invention, when there is no vehicle (B) in front of the vehicle (A) within a certain distance that travels in the same direction and there is no oncoming vehicle (C), the headlamps (501, 502) operate in the maximum light intensity (high beam).

When it is detected that the distance (d) with the leading vehicle (B), that is monitored by the signals received from the ultrasonic sensors (101, 102), falls below a certain threshold value, the microprocessor (300) decreases the signal level at the analog outputs. With the decrease in the analog output signal level, the voltage between the base-emitter ends of the transistors contained by the current driver circuits (401, 402) drops, the current that powers the headlamps (501, 502) decreases and the intensity of the light emitted by the headlamps (501, 502) decreases to a certain level. Thus the driver of the vehicle (B) that is followed is prevented from getting disturbed by the high beam coming from behind. In the case that the distance (d) with the leading vehicle (B) again rises to a value above the threshold value, the microprocessor (300) brings back the signal level at its analog outputs to maximum level and enables the transistors at the current driver circuits (401, 402) to switch to full conduction and the light intensity of the headlamps (501, 502) is raised back to the maximum level.

When the light of the headlamps of the oncoming vehicle (C) is detected by the signals coming from the light sensors (201, 202), the microprocessor (300) decreases the signal level at its analog outputs that are connected to the current driver circuits (401 and/or 402) corresponding to the light sensor (201 and/or 202) detecting the light. With the decrease in the analog output signal level, the voltage between the base-emitter ends of the transistors contained by the current driver circuits (401, 402) drops, the current that powers the headlamps (501, 502) decreases and the intensity of the light emitted by the headlamps (501, 502) decreases to a certain level. Thus the driver of the oncoming vehicle (C) is prevented from getting disturbed by the high beam. In the case that the light coming from the vehicle (C) headlamps goes out of the detection area of the light sensors (201, 202), the microprocessor (300) brings back the signal level at its analog outputs to maximum level and enables the transistors at the current driver circuits (401, 402) to switch to full conduction and the light intensity of the headlamps (501, 502) is raised back to the maximum level.

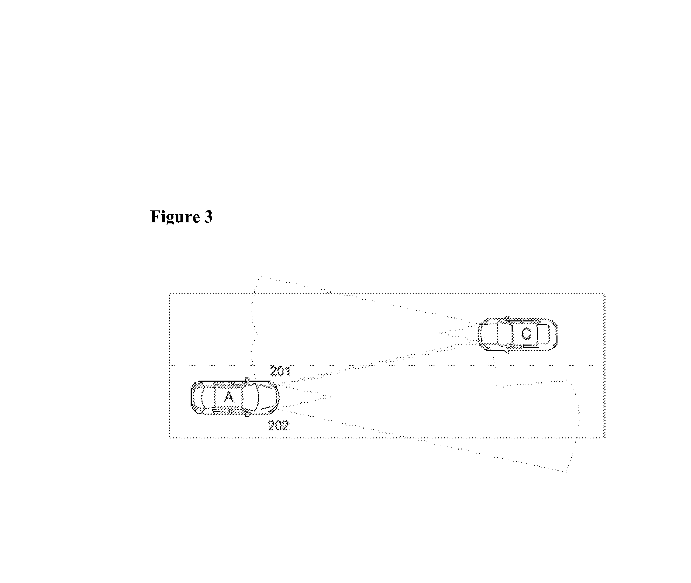

If the light emitted by the headlamps of the oncoming vehicle (C) is detected by only one of the light sensors (201, 202), the above described automatic headlamp adjustment process is performed only on the headlamp (501 or 502) which is located at the side where the light sensor (201, 202) on which light is falling is located. For example, in the case shown in Figure 3, while the vehicle (C) light is being detected by the left light sensor (201), the right light sensor (202) does not detect any oncoming vehicle light. In this case, the microprocessor (300) decreases the signal level at only the left analog output and cuts down the current driving the left current driver circuit (401). Thus the light intensity of the left headlamp (501) that may disturb the driver of the oncoming vehicle (C) is reduced while the light intensity of the right headlamp (502) is not reduced unnecessarily. Furthermore, thanks to the fact that the light sensors (201, 202) are mounted to the front part of the vehicle (A) such that they will only detect the oncoming vehicles, the headlamps (501, 502) are prevented from being dimmed for other vehicles which are not coming from the opposite direction and will not be disturbed by the headlamp (501, 502) light. For example, if the light of a vehicle coming from a secondary road reaches the front part of the vehicle (A), it will not be detected by the light sensors (201, 202) since this light will not be coming from across, and thus unnecessary dimming of the light of the headlamps (501, 502) below the maximum light level and reduction of the sight will be prevented.

In one embodiment of the invention, when it is detected that the following distance (d) decreases below the threshold value or when the lights of an oncoming vehicle (C) are detected, the light intensity of the headlamps (501, 502) is reduced to 80% of the maximum level.

In one embodiment of the invention, the threshold value used for evaluation of the distance (d) with the followed vehicle is 35 meters. Accordingly, when the following distance (d) falls below 35 meters, light intensity of the headlamps (501, 502) is reduced from the maximum level to a certain value.

In another embodiment of the invention, in addition to the distance information coming from the ultrasonic sensors (101, 102) the microprocessor (300) also monitors the time that is remained under threshold distance value. In the case that the following distance (d) remains under the threshold value more than a certain period of time, the microprocessor (300) decreases the level of its analog output signals and thus the light intensity of the headlamps (501, 502) to the minimum level (low beam).

In one embodiment of the invention, the period of time that is taken as basis for decreasing the light intensity of the headlamps (501, 502) to the minimum level when the following distance (d) remains under a certain value, is 10 seconds. Accordingly, when the following distance (d) is detected to fall below the threshold value, light intensity of the headlamps (501, 502) is reduced from the maximum level to a certain level, and if it is determined that the distance remains under the threshold value for at least 10 seconds, light intensity of the headlamps (501, 502) is decreased to the minimum level.

The inventive automatic headlamp system (100) has a full electronic structure and does not comprise any mechanical member. This both increases useful life of the system and ensures safe and comfortable driving by enabling the system to respond very rapidly to changing light and distance conditions.

The invention is not limited to the embodiments described above. A person skilled in the art can easily disclose different embodiments of the invention. These embodiments should be evaluated within the scope of the protection sought by the claims.

## Claims

1. A headlamp system used for automatic adjustment of the light intensities of the headlamps in motor vehicles; **comprising**
- at least one ultrasonic sensor (101, 102) which measures the distance (d) between the motor vehicle (A) that it is mounted on and the vehicle (B) that is followed,
- at least one light sensor (201, 202) which detects the light coming from the oncoming vehicle (C),
- a microprocessor (300), to which the sensors (101, 102, 201, 202) are connected, and which has at least one transceiver, at least one input/output (I/O), at least one optical sensor input and at least one analog output,
- at least one current driver circuit (401, 402) connected to the microprocessor (300),
- at least one headlamp (501, 502) driven by the current driver circuit (401, 402); **characterized by**
- a microprocessor (300), which changes the signal level at the analog output according to the data received from the ultrasonic sensors (101, 102) and light sensors (201, 202), and thereby controls the input current of the current driver circuit (401, 402),
- at least one current driver circuit (401, 402), whose current level at the output thereof changes in direct proportion with the signal level at the analog output of the microprocessor (300).

2. A headlamp system (100) according to Claim 1, **characterized in that** it comprises two headlamps (501, 502), one on the left and the other on the right, and for each headlamp (501, 502), one ultrasonic sensor (101, 102), one light sensor (201, 202) and one current driver circuit (401,402).

3. A headlamp system (100) according to Claim 1 or Claim 2, **characterized by** a microprocessor (300) which is connected to the ultrasonic sensors (101, 102) through its transceiver input/outputs (I/O), to the light sensors (201, 202) through its optical sensor inputs, to the current driver circuits (401, 402) through its analog outputs; and which can perform bidirectional data transfer with the ultrasonic sensors.

4. A headlamp system (100) according to any of the preceding claims, **characterized by** current driver circuit (401, 402) having a bipolar transistor whose 'base' forms the end to which the analog output of the microprocessor (300) is connected, "collector" forms the end by which the current driver circuit (401, 402) is driven by the supply voltage coming from the vehicle accumulator, and the "emitter" forms the output by which the electric energy required to light the headlamps (501, 502) is transmitted.

5. A headlamp system (100) according to any of the preceding claims, **characterized by** a microprocessor (300) which controls the light intensities of the left headlamp (501) and the right headlamp (502) independent from each other according to the data received from the ultrasonic sensors (101, 102) and the light sensors (201, 202).

6. A headlamp system (100) according to any of the preceding claims, **characterized by** a microprocessor (300), which enables the headlamps (501, 502) to be operated in the maximum light intensity, when there is no vehicle (B) in front of the vehicle (A) within a certain distance that travels in the same direction and there is no oncoming vehicle (C).

7. A headlamp system (100) according to Claim 6, **characterized by** a microprocessor (300) which decreases the signal level at the analog outputs when it is detected that the distance (d) with the leading vehicle (B), that is monitored according to the signals received from the ultrasonic sensors (101, 102), has fallen below a certain threshold value.

8. A headlamp system (100) according to Claim 7, **characterized by** a microprocessor (300) which increases the signal level at the analog outputs to the maximum level when the distance (d) with the leading vehicle (B) rises above the threshold value.

9. A headlamp system (100) according to any of Claim 6 to Claim 8, **characterized by** a microprocessor (300), which, when the light of the headlamps of an oncoming vehicle (C) is detected by the signals coming from the light sensors (201, 202), decreases the signal level at the analog output corresponding to the light sensor (201 or 202) detecting the light.

10. A headlamp system (100) according to Claim 6 to Claim 9, **characterized by** a microprocessor (300) which brings the signal level at the analog outputs to the maximum level in the case that the light coming from the vehicle (C) headlamps goes out of the detection area of the light sensors (201, 202).

11. A headlamp system (100) according to Claim 7 or Claim 9, **characterized by** a current driver circuit (401, 402), whose output current output powering the headlamps (501, 502) decreases depending on the decrease in the voltage between the base-emitter ends of the transistor thereof upon the decrease in the analog output signal level, and which thus enables the intensity of the light emitted by the headlamps (501, 502) to decrease to a certain level.

12. A headlamp system (100) according to Claim 8 or Claim 10, **characterized by** a current driver circuit (401, 402), which maximizes the output current powering the headlamps (501, 502) depending on the increase in the voltage between the base-emitter ends of the transistor thereof upon the increase of the analog output signal level to the maximum level, and which thus enables the intensity of the light emitted by the headlamps (501, 502) to rise to the maximum level.

13. A headlamp system (100) according to any of Claim 6 to Claim 12, wherein the light intensity of the headlamps (501, 502) is reduced to 80% of the maximum level when it is detected that the following distance (d) has fallen below the threshold value.

14. A headlamp system (100) according to any of Claim 6 to Claim 13, wherein the light intensity of the headlamps (501, 502) is reduced to 80% of the maximum level when the lights of an oncoming vehicle (C) are detected.

15. A headlamp system (100) according to any of Claim 7 to Claim 14, wherein the threshold value used for evaluation of the distance (d) with the followed vehicle is 35 meters.

16. A headlamp system (100) according to any of Claim 7 to Claim 15, **characterized by** a microprocessor (300) which decreases the level of its analog output signals and thus the light intensity of the headlamps (501, 502) to the minimum level in the case that the following distance (d) remains under the threshold value more than a certain period of time.

17. A headlamp system (100) according to Claim 16, **characterized by** a microprocessor (300) which decreases the level of its analog output signals and thus the light intensity of the headlamps (501, 502) to the minimum level in the case that the following distance (d) remains under the threshold value more than 10 seconds.
